Europäisches Patentamt

European Patent Office

Office européen des brevets

(11) Veröffentlichungsnummer: **0 504 558 A2**

# EUROPÄISCHE PATENTANMELDUNG

(21) Anmeldenummer: **92101322.3**

(22) Anmeldetag: **28.01.92**

(51) Int. Cl.5: **B65D 51/18**, B60K 15/04

(30) Priorität: **16.03.91 DE 9103228 U**

(43) Veröffentlichungstag der Anmeldung:
**23.09.92 Patentblatt 92/39**

(84) Benannte Vertragsstaaten:
**AT BE DE ES FR GB IT LU NL SE**

(71) Anmelder: **RHEIN-BONAR KUNSTSTOFF-TECHNIK GmbH
4. Industriestrasse 18
W-6832 Hockenheim(DE)**

(72) Erfinder: **Eichelberger, Gerhard
Waghäuseler Strasse 24
W-6823 Neulussheim(DE)**

(74) Vertreter: **Ratzel, Gerhard, Dr.
Seckenheimer Strasse 36a
W-6800 Mannheim 1(DE)**

(54) **Einfüllstutzen von Kunststofftanks mit einer austauschbaren Verschlusshülse.**

(57) Die Erfindung betrifft einen Einfüllstutzen von Kunststofftanks mit einer austauschbaren Verschluß-hülse für darauf bzw. darin ein- bzw. aufschraubbare oder einbringbare Verschlußdeckel, bei dem der Ein-füllstutzen, ein zur Aufnahme der Verschlußhülse geeignetes Gewinde aufweist, daß mit einem Gewin-de der Verschlußhülse zwecks axialer Dichtung und/oder Sicherung korrespondiert, wobei die Verschlußhülse einen, ein Dichtmittel aufnehmenden Kragen aufweist, der den Bund des Einfüllstutzens zumindest teilweise umgibt oder mit diesem in Eingriff bringbar ist und zusammen mit Anschlägen des Einfüllstutzens oder mittels durch einbringbare Re-tentionselemente die radiale Verdrehsicherung gebil-det wird.

FIG.1

EP 0 504 558 A2

Die Erfindung betrifft einen Einfüllstutzen von Kunststofftanks mit einer austauschbaren Verschlußhülse.

Kunststofftanks werden mittels einem Tankdekkel verschlossen. Hierbei besteht die Gefahr des Materialabtrags im Bereich der Einschraubstelle. Herkömmlicherweise werden daher entsprechende metallene Hülsen im Bereich des Einfüllstutzen eingebracht, so daß der einzuschraubende oder einzupressende Tankverschlußdeckel nicht am Kunststoff, sondern am verschleißfesteren Metall eingreift.

Die Anordnung solcher Hülsen erfolgt entweder schon beim Herstellungsverfahren des Tanks, wobei diese mit eingegossen werden oder durch nachträglichen Einbau.

Ein wesentliches technisches Problem beim Einbau und der Funktion solcher Hülsen besteht in der axialen und radialen Sicherung.

Entweder sind die verwendeten Sicherungsmaßnahmen, beispielsweise Schrauben, nur schwer zugänglich, oder aber die Befestigungsmaßnahmen beeinflussen die Dichtwirkung von einzusetzenden Dichtelementen bzw. die Montage solcher Hülsen erweist sich als aufwendig und ist mit Spezialwerkzeugen durchzuführen, damit die Dichtwirkung zwischen Hülse und Einfüllstutzen erreicht wird.

Der vorliegenden Erfindung liegt daher die Aufgabe zugrunde, einen Einfüllstutzen von Kunststofftanks mit einer Verschlußhülse, für darauf oder darin ein- oder aufschraubbare oder in sonstiger Weise einbringbaren Verschlußdeckel zu schaffen, der austauschbar bzw. nachträglich auf den Einfüllstutzen des Kunststofftanks montierbar ist und hierbei mit einfachsten Mitteln axial und radial gesichert ist, ohne dabei die Dichtwirkung von Dichtmitteln zu beeinflussen.

Der Erfindung liegt dabei die überraschende Erkenntnis zugrunde, daß die Flexibilität bzw. Elastizität der zu verwendenden Verschlußhülse zur axialen und radialen Sicherung einsetzbar ist.

Diese Aufgabe wird erfindungsgemäß durch einen Einfüllstutzen laut des vorgeschlagenen Anspruchs 1 gelöst. Besondere Weiterbildungen bzw. Varianten der Erfindung sind in den Unteransprüchen gekennzeichnet.

Hierbei ist vorgesehen, den erfindungsgemäßen Einfüllstutzen von Kunststofftanks mit einer austauschbaren Verschlußhülse für darauf oder darin ein- bzw. aufschraubbare oder in anderer Weise einbringbaren Verschlußdeckel derart zu gestalten, daß der Einfüllstutzen, ein zur Aufnahme der Verschlußhülse geeignetes Gewinde aufweist, das mit einem Gewinde der Anschlußhülse zwecks axialer Dichtung und/oder Sicherung korrespondiert, wobei die Verschlußhülse einen, ein Dichtmittel aufnehmenden Kragen aufweist, der den Bund des Einfüllstutzens zumindest teilweise umgibt oder in diesen eingreift und zusammen mit in einbringbarer Anschläge des Einfüllstutzens oder mittels durch einbringbare Retentionselemente die radiale Verdrehsicherung gebildet wird/bildet. Eine vorgeschlagene Variante sieht hierbei vor, daß der Einfüllstutzen ein Innengewinde aufweist, in das die Verschlußhülse eindrehbar ist. An seinem zum Tankdeckel hinweisenden Ende weist die Verschlußhülse einen Kragen auf, der zur Aufnahme eines Dichtmittels, vorzugsweise einem O-Ring geeignet ist. Beim Einschrauben der Verschlußhülse in das Gewinde des Einfüllstutzens erfolgt die Verpressung des Dichtringes. Die axiale Sicherung ist durch den Eingriff beider Gewinde erreicht. Die radiale Verdrehsicherung erfolgt durch Umbiegen des Kragens, wobei dieser bevorzugterweise aus Einzelzungen gebildet wird, die dann in entsprechenden Einkerbungen des Einfüllstutzens zu liegen kommen und an den hervorstehenden Rippen der Einbuchtungen anschlagen.

Alternativ besteht auch die Möglichkeit, die radiale Verdrehsicherung durch Schrauben zu bilden.

Eine räumliche Umkehr dieser Ausführungsvariante besteht beispielsweise darin, das zur Axialsicherung dienende Gewinde am Außenumfang des Einfüllstutzens anzuordnen und den Kragen der Verschlußhülse in den Innenraum des Einfüllstutzens einragen zu lassen. Wenn ein verschraubbarer Tankdeckel verwendet wird, sind zumindest am Anfangsbereich einige Gewindegänge zum Eingriff des Tankdeckelgewindes anzuordnen. Im unteren Auslauf des Kragens kann dann wieder die zungenartige Ausbildung vorgesehen werden, wobei entsprechende Anschläge des Einfüllstutzens dann am Innendurchmesser vorzusehen sind.

Ein besonderes Merkmal der Erfindung besteht darin, daß das Innengewinde und das Außengewinde der Verschlußhülse bzw. deren Kern- und Nenndurchmesser durch die Verschlußhülsenwandung gebildet wird.

Anhand den beigefügten Zeichnungen, die besonders bevorzugte Ausführungsbeispiele der Erfindung zeigen, wird diese nun näher beschrieben.

Dabei zeigen:

Figur 1      Den erfindungsgemäßen Einfüllstutzen von Kunststofftanks mit einer austauschbaren Verschlußhülse, die in ein Innengewinde des Einfüllstutzens eingeschraubt ist.

Figur 2      Eine Abbildung der Erfindung aus der in Figur 1 angedeuteten Richtung A.

Figur 3      Einen Teilbereich der Wandung einer weiteren Ausführungsform, bei der der Einfüllstutzen ein Außengewinde aufweist.

Figur 4      Eine Ausführungsvariante der Erfindung, wobei zur radialen Sicherung eine Schraube eingebracht ist.

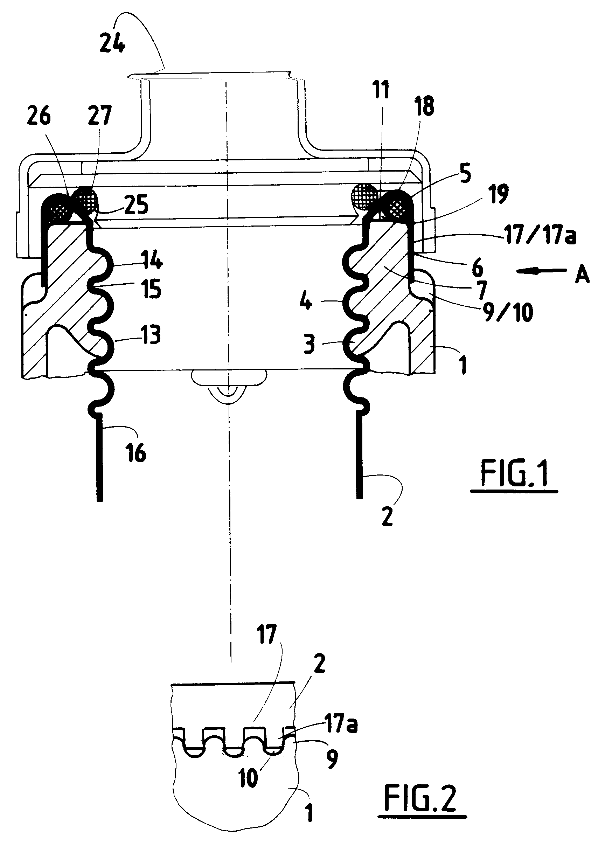

Figur 1 zeigt den erfindungsgemäßen Einfüllstutzen 1 nebst Verschlußhülse 2. Der Einfüllstutzen 1 weist in seinem Halsbereich ein Innengewinde 3 auf, in daß das Außengewinde 4 der Verschlußhülse 1 eingreift. An seinem, zum Tankdeckel 24 hinweisenden Ende ist an der Verschlußhülse 2 ein Kragen 6 angeordnet. Der Kragen 6 ist derart geformt, daß zwischen Verschlußhülsenscheitel 18 und Stirnfläche 11 des Einfüllstutzens 1 ein Hohlraum 19 gebildet wird, der zur Aufnahme eines Dichtmittels 5 geeignet ist. Dieser Hohlraum 19 wird durch Eindrehen der Verschlußhülse 2 in den Einfüllstutzen 1 axial reduziert, so daß das Dichtmittel 5 einer Pressung unterzogen wird, was zur Dichtwirkung führt. Der Kragen 6 umgreift hierbei den Bund 7 des Einfüllstutzens 1.

Sind allerdings am Bund 7 Anschläge 9 angeordnet, die zur radialen Verdrehsicherung beitragen, so ist der Kragen 6 zunächst beim Einschrauben der Verschlußhülse 2 in etwa horizontaler Lage positioniert. Erst nachdem die Verschlußhülse 2 soweit in den Einfüllstutzen 1 eingeschraubt ist, daß die gewünschte Dichtwirkung erzielt ist, wird der Kragen 6 bzw. dessen elastischer Teilbereich 17, der beispielsweise aus Zungen 17a gebildet ist, nach unten eingebogen, so daß die Zungen 17a in den Einbuchtungen 10 zwischen zweier Anschläge 9 zu liegen kommen.

Ein besonderes Merkmal der Erfindung besteht darin, daß der Kerndurchmesser 14 und der Nenndurchmesser 15 der Verschlußhülse durch die Verschlußhülsenwandung 16 gebildet wird.

Im Bereich des Übergangs des Gewindes 4 der Verschlußhülse 2 zum Kragen 6 ist eine Auflagefläche 26 vorgesehen, auf die der Dichtring 27 des Verschlußdeckels 24 zu liegen kommt.

Figur 2 zeigt deutlich die Anordnung der als Zungen 17a ausgebildeten elastischen Teilbereiche 17 des Kragens 6. Zur Verdeutlichung ist hierbei der Tankdeckel nicht dargestellt.

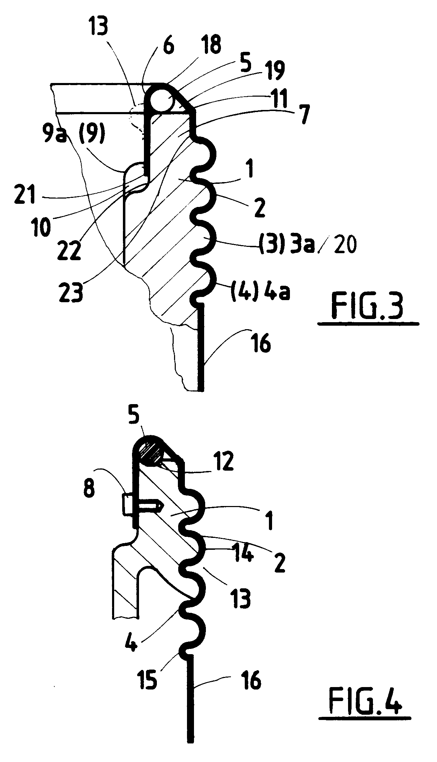

Die Figur 3 zeigt eine mögliche Ausführungsvariante der Erfindung, bei der die Verschlußhülse in ein am Einfüllstutzen 1 angeordnetes Außengewinde 3a eingreift. Hierzu weist die Verschlußhülse ein Gewinde 4a auf, das an der Krageninnenseite 23 angeordnet ist. Der gegenüberliegende Hülsenbereich ragt in das Einfüllstutzeninnere und fungiert dort praktisch spiegelbildlich als Kragen, wobei zumindest am Anfangsbereich ein Gewinde 13 anzuordnen ist (wie strichpunktiert angedeutet), damit ein einschraubbarer Verschlußdeckel eindrehbar ist.

Für die radiale Sicherung dieser Ausführungsvariante ist es dann wiederum möglich, am Einfüllstutzeninnenraum ein Anschlag 9a anzuordnen, an welchem entsprechende Zungen 21 der Verschlußhülse 2 angreifen.

Die Figur 4 zeigt eine Ausführungsvariante der Erfindung,bei der als Retentionselemente 8, Schrauben verwendet sind, wobei hier in einer weiteren Ausführungsform der Erfindung anstatt der Auflagefläche eine Dichtkörperaufnahmenut 12 eingebracht ist.

Mit der vorliegenden Erfindung wird ein Einfüllstutzen von Kunststofftanks mit einer Verschlußhülse geschaffen, die austauschbar gestaltet ist und hierbei auf einfachste Weise axial und radial gegen Verdrehung gesichert ist.

Bezugszeichenliste

| 1 | Einfüllstutzen |
|---|---|
| 2 | Verschlußhülse |
| 3 | Gewinde |
| 3a | Gewinde |
| 4 | Gewinde |
| 4a | Gewinde |
| 5 | Dichtmittel |
| 6 | Kragen |
| 7 | Bund |
| 8 | Retentionselement/Schraube |
| 9 | Anschlag (Außen) |
| 9a | Anschlag (Innen) |
| 10 | Einbuchtung |
| 11 | Stirnfläche |
| 12 | Einlagenut |
| 13 | Innengewinde |
| 14 | Kerndurchmesser |
| 15 | Nenndurchmesser |
| 16 | Verschlußhülsenwandung |
| 17 | Elastischer Teilbereich |
| 17a | Zungen |
| 18 | Verschlußhülsenscheitel |
| 19 | Hohlraum |
| 20 | Außenumfang |
| 21 | Zungen |
| 22 | Innendurchmesser |
| 23 | Krageninnenseite |
| 24 | Verschlußdeckel |
| 25 | Dichtkörperaufnahmenut |
| 26 | Auflagefläche |
| 27 | Dichtring |

**Patentansprüche**

1. Einfüllstutzen von Kunststofftanks mit einer austauschbaren Verschlußhülse für darauf/darin ein-/aufschraubbare oder einbringbare Verschlußdeckel,
dadurch gekennzeichnet,
daß der Einfüllstutzen (1), ein zur Aufnahme der Verschlußhülse (2) geeignetes Gewinde (3) aufweist, das mit einem Gewinde (4) der Verschlußhülse (2) zwecks axialer Dichtung und/oder Sicherung korrespondiert, wobei die Verschlußhülse (2) einen, ein Dichtmittel (5) aufnehmenden Kragen (6) aufweist, der den Bund (7) des Einfüllstutzens (1) zumindest teilweise umgibt oder mit diesem in Eingriff bringbar ist und zusammen mit Anschlägen (9) des Einfüllstutzens oder mittels durch einbringbare Retentionselemente (8) die radiale Verdrehsicherung gebildet wird/bildet.

2. Einfüllstutzen von Kunststofftanks mit einer austauschbaren Verschlußhülse nach Anspruch 1,
dadurch gekennzeichnet,
daß der Einfüllstutzen (1) ein Innengewinde (3) aufweist.

3. Einfüllstutzen von Kunststofftanks mit einer austauschbaren Verschlußhülse nach Anspruch 1 bis 2,
dadurch gekennzeichnet,
daß der Einfüllstutzen (1) einen radialen Bund (7) aufweist.

4. Einfüllstutzen von Kunststofftanks mit einer austauschbaren Verschlußhülse nach Anspruch 1 bis 3,
dadurch gekennzeichnet,
daß der Bund (7) zumindest teilweise am Außenumfang radial verlaufende Anschläge (9) oder Einbuchtungen (10) aufweist.

5. Einfüllstutzen von Kunststofftanks mit einer austauschbaren Verschlußhülse nach Anspruch 1 bis 4,
dadurch gekennzeichnet,
daß der Einfüllstutzen (1) eine als Auflage für ein Dichtmittel (5) dienende Stirnfläche (11) aufweist.

6. Einfüllstutzen von Kunststofftanks mit einer austauschbaren Verschlußhülse nach Anspruch 1 bis 5,
dadurch gekennzeichnet,
daß in der Stirnfläche (11) des Einfüllstutzens (1) eine Einlagenut (12) für ein Dichtungsmittel (5) vorgesehen ist.

7. Einfüllstutzen von Kunststofftanks mit einer austauschbaren Verschlußhülse nach Anspruch 1 bis 6,
dadurch gekennzeichnet,
daß die Verschlußhülse (2) ein Außengewinde (4) aufweist.

8. Einfüllstutzen von Kunststofftanks mit einer austauschbaren Verschlußhülse nach Anspruch 1 bis 6,
dadurch gekennzeichnet,

daß die Verschlußhülse (2) ein Außengewinde (4) und ein Innengewinde (13) aufweist.

9. Einfüllstutzen von Kunststofftanks mit einer austauschbaren Verschlußhülse nach Anspruch 1 und mindestens einem der vorhergehenden Ansprüche,
dadurch gekennzeichnet,
daß das Innengewinde (13) und das Außengewinde (4) bzw. deren Kern- (14) und/oder Nenndurchmesser (15) durch die Verschlußhülsenwandung (16) gebildet wird.

10. Einfüllstutzen von Kunststofftanks mit einer austauschbaren Verschlußhülse nach Anspruch 1 bis 9,
dadurch gekennzeichnet,
daß der Kragen (6) der Verschlußhülse (2) elastisch verformbare Teilbereiche (17) aufweist.

11. Einfüllstutzen von Kunststofftanks mit einer austauschbaren Verschlußhülse nach Anspruch 11 und mindestens einem der vorhergehenden Ansprüche,
dadurch gekennzeichnet,
daß die elastischen Teilbereiche (17) als biegsame Zungen (17a) ausgebildet sind.

12. Einfüllstutzen von Kunststofftanks mit einer austauschbaren Verschlußhülse nach Anspruch 1 bis 11,
dadurch gekennzeichnet,
daß zwischen Stirnfläche (11) des Einfüllstutzens (1) und des Verschlußhülsenscheitels (18) ein axial reduzierbarer Hohlraum (19) gebildet ist.

13. Einfüllstutzen von Kunststofftanks mit einer austauschbaren Verschlußhülse nach Anspruch 1, 3, 5, 6, 8 und 12,
dadurch gekennzeichnet,
daß der Einfüllstutzen (1) ein Außengewinde (3a) aufweist.

14. Einfüllstutzen von Kunststofftanks mit einer austauschbaren Verschlußhülse nach Anspruch 1, 3, 5, 6, 8, 12 bis 13,
dadurch gekennzeichnet,
daß der radiale Bund (7) des Einfüllstutzens (1) zumindest teilweise am Innendurchmesser (22) radial verlaufende Anschläge (9a) aufweist.

15. Einfüllstutzen von Kunststofftanks mit einer austauschbaren Verschlußhülse nach Anspruch 1, 3, 5, 6, 8, 12 bis 14,
dadurch gekennzeichnet,
daß die Verschlußhülse (1) ein Innengewinde (4a) aufweist.

16. Einfüllstutzen von Kunststofftanks mit einer austauschbaren Verschlußhülse nach Anspruch 1, 3, 5, 6, 8 und 12 bis 13,
dadurch gekennzeichnet,
daß die in den Einfüllstutzen (1) einragende Verschlußhülsenwandung (16) zumindest im oberen Kragenbereich ein Innengewinde (13) und im unteren Auslauf biegsame Zungen (21) aufweist.

17. Einfüllstutzen von Kunststofftanks mit einer austauschbaren Verschlußhülse nach Anspruch 1 und mindestens einem der vorhergehenden Ansprüche,
dadurch gekennzeichnet,
daß als Retentionselement (8) zur radialen Verdrehsicherung, Schrauben, Nieten oder dergleichen eingesetzt sind.

18. Einfüllstutzen von Kunststofftanks mit einer austauschbaren Verschlußhülse nach Anspruch 1 bis 17,
dadurch gekennzeichnet,
daß zwischen Verschlußdeckel (24) bzw. dessen Dichtkörperaufnahmenut (25) und Verschlußhülse (2) eine Auflagefläche (26) für einen Dichtring (27) gebildet ist.

EP 0 504 558 A2

FIG.1

FIG.2

FIG.3

FIG.4